# EUROPÄISCHE PATENTSCHRIFT

(11) **EP 2 737 252 B1**
(45) Veröffentlichungstag und Bekanntmachung des Hinweises auf die Patenterteilung: **20.09.2017**
(21) Anmeldenummer: 12728190.5
(22) Anmeldetag: 14.06.2012
(51) Int. Cl.: F23R 3/54, F23R 3/52, F02C 3/08

(54) **GASTURBINENZENTRIPETALRINGBRENNKAMMER SOWIE VERFAHREN ZUR STRÖMUNGSFÜHRUNG**
GAS TURBINE CENTRIPETAL ANNULAR COMBUSTION CHAMBER AND METHOD FOR FLOW GUIDANCE
CHAMBRE DE COMBUSTION ANNULAIRE CENTRIPÈTE DE TURBINE À GAZ ET PROCÉDÉ DE GUIDAGE D'ÉCOULEMENT

(30) Priorität: 28.07.2011 DE 102011108887
(43) Veröffentlichungstag der Anmeldung: 04.06.2014
(73) Patentinhaber: Rolls-Royce Deutschland Ltd & Co KG, 15827 Blankenfelde-Mahlow (DE)
(72) Erfinder: NEGULESCU, Dimitrie, 14163 Berlin (DE)
(74) Vertreter: Hoefer & Partner Patentanwälte mbB
(86) Internationale Anmeldenummer: PCT/EP2012/002518
(87) Internationale Veröffentlichungsnummer: WO 2013/013740

(56) Entgegenhaltungen:
- EP-A1- 0 402 693
- EP-A1- 0 870 990
- EP-A2- 1 830 129
- EP-A2- 1 978 308
- WO-A1-2007/102807
- DE-A1-102010 023 816
- US-A1- 2007 012 048
- US-B1- 6 955 053

## Beschreibung

Die Erfindung bezieht sich auf eine Gasturbinenbrennkammeranordnung mit zumindest einem Zentrifugalverdichter sowie einer zentripetalen Ringbrennkammer.

Aus dem Stand der Technik sind Gasturbinen bekannt, bei welchen ein Zentrifugalverdichter verwendet wird, durch welchen die Luftströmung nach außen in radialer Richtung geleitet wird. Derartige Zentrifugalverdichter sind mit einer zentripetalen Ringbrennkammer oder Umkehrbrennkammer gekoppelt, in welcher die Luftströmung umgelenkt und nach innen in Richtung einer Triebwerksachse geleitet wird, bevor sie einer axial wirkenden Turbine zugeführt wird.

Im Einzelnen handelt es sich hierbei um Fluggasturbinenantriebe, welche als einzige oder als die letzte Verdichterstufe eine Radial- oder eine Diagonalverdichterstufe, auch Zentrifugalverdichterstufe genannt, aufweisen. Die Austrittsgeschwindigkeit aus dem Zentrifugalverdichterlaufrad beschreitet meist ein Machzahlniveau von ca. 0,8. Aus diesem Grunde wird nach dem Zentrifugalverdichterlaufrad im Stand der Technik ein mehrstufiges und radial-axial ausgebildetes Leiträdersystem (Leitschaufeln) eingesetzt. Dieses dient zur Verzögerung der Strömung auf eine Machzahl von ca. 0,15 sowie zur Strömungsumlenkung in Axialrichtung, bevor die Strömung zu einem Brennkammerringraum unter einem Brennkammergehäuse umgeleitet wird (Strömungsstoß). Nach dem Strömungsstoß wird gemäß dem Stand der Technik ein Teil der Verdichterluft radial nach innen zu den Einspritzdüsen im Primärraum eines Flammrohrs zugeführt. Hierbei zeigt der Stand der Technik sowohl Umkehrflammrohre als auch Zentripetalflammrohre. Die restliche aus dem Zentrifugalverdichter ausströmende Luft wird durch Ringräume um das Flammrohr zu einer Anordnung von Ausnehmungen (Durchmischlöchern) im Flammrohr zugeführt. Nach jedem Brenner stabilisiert sich die Flamme, wobei die Flammenachse in einer Meridianebene (Ebene durch die Triebwerksachse) nach innen gerichtet ist. Die Brennkammerströmung ist sowohl am Eintritt als auch am Flammrohraustritt im Wesentlichen drallfrei. Die heißen Verbrennungsgase werden durch einen filmgekühlten Turbinenleitschaufelkranz auf Schallgeschwindigkeit beschleunigt und zugleich um einen Winkel von ca. 70° in Drehrichtung des Turbinenrades umgelenkt.

Bei den aus dem Stand der Technik bekannten Ausgestaltungen erweist es sich als nachteilig, dass eine aufwändige Brennkammerkonstruktion erforderlich ist, welche ein großes Gewicht aufweist. Weiterhin ist das Leitschaufelsystem des Zentrifugalverdichters (Radialverdichterleitschaufelsystem) sehr komplex und hinsichtlich seiner Strömungsführung und Strömungsoptimierung aufwändig.

Ein zusätzlicher Nachteil der aus dem Stand der Technik bekannten Konstruktionen liegt darin, dass insgesamt eine Strömungsumlenkung durch die Brennkammer um ca. 300° erforderlich ist. Hieraus ergeben sich zusätzliche Strömungsverluste, welche wiederum zu einem erhöhten Triebwerksverbrauch und zu erhöhten Schadstoffemissionen führen.

Die EP 1 830 129 A2 offenbart eine zentripetale Ringbrennkammer mit zu einer Meridianebene geneigten Brennern. Die US 2007/0012048 A1 offenbart eine Axialbrennkammer mit zur Mittelachse geneigten Brennern. Der Erfindung liegt die Aufgabe zugrunde, eine Gasturbinenbrennkammeranordnung der eingangs genannten Art zu schaffen, welche bei einfachem und axial kürzerem Aufbau und einfacher, kostengünstiger Herstellbarkeit unter Vermeidung der Nachteile des Standes der Technik einen hohen Wirkungsgrad aufweist.

Erfindungsgemäß wird die Aufgabe durch die Merkmale der unabhängigen Ansprüche gelöst, die jeweiligen Unteransprüche zeigen weitere vorteilhafte Ausgestaltungen der Erfindung.

Erfindungsgemäß ist somit vorgesehen, dass zwischen dem Zentrifugalverdichter und der Ringbrennkammer eine Leitschaufelanordnung vorgesehen ist, welche so ausgebildet ist, dass die aus dem Zentrifugalverdichter ausströmende Luft in einem Winkel zwischen 20° und 30°, bevorzugt 25° zur Triebwerksachse umgelenkt wird. Die Luftströmung wird daraufhin in diesem Winkel der Brennkammer zugeführt. Erfindungsgemäß ist weiterhin vorgesehen, dass der Einströmbereich in die Brennkammer so ausgebildet ist, dass die Luft in einem Winkel zwischen 30° und 40°, bevorzugt 35° zur Triebwerksachse geleitet wird.

Um eine optimale Verbrennung und einen optimalen Flammenverlauf zu erzielen, sind erfindungsgemäß die Mittelachsen der Brenner der Brennkammer in einem Winkel zwischen 30° und 40°, bevorzugt 35° zu einer Meridianebene geneigt, durch welche die Triebwerksachse verläuft.

Gemäß der Erfindung lenkt somit das Leitschaufelsystem nach dem Radialverdichterlaufrad (Zentrifugalverdichterlaufrad) die Strömung nicht, wie aus dem Stand der Technik bekannt, vollständig in Axialrichtung um, sondern nur bis zu einem Restdrallwinkel, der zwischen 20° und 30°, bevorzugt 25° beträgt. Die Luftströmung weist somit vor dem Strömungsstoß zur Brennkammer einen erheblichen Restdrallwinkel auf.

Erfindungsgemäß erfolgt der Strömungsstoß zum Flammrohr mit diesem Drall, wobei die Strömung radial nach innen gerichtet wird. Dabei ist erfindungsgemäß auf einer Radialposition des Flammrohrdoms der Strömungsdrall auf 30° bis 40°, bevorzugt 35° angestiegen.

Wie bereits erwähnt, sind erfindungsgemäß entsprechend die Einspritzdüsen und die Hitzeschilder im Flammrohrdom gedreht, d.h. geneigt angeordnet.

Die Flammen bilden sich nach den Brennern somit mit einem Anfangsdrall, der zwischen 30° und 40°, bevorzugt 35° beträgt. Die Flammen folgen dabei einem räumlichen Verlauf mit einem ansteigenden Drall zwischen 50° und 60°, bevorzugt 55° im axialen Austritt des Flammrohrs. Dieser Bereich ist zugleich der Eintrittsbereich zu einem Turbinenleitschaufelkranz. Die Flammen bilden sich erfindungsgemäß somit in einem räumlichen Verlauf und nicht, wie beim Stand der Technik, in einer Meridianebene.

Erfindungsgemäß ist es somit besonders günstig, dass die Ringbrennkammer zur Ausbildung einer Spiralflamme in dem zentripetalen Flammrohr ausgebildet ist.

Weiterhin ist es erfindungsgemäß besonders günstig, wenn eine Anordnung von Ausnehmungen zur Einbringung von Luft aus dem Zentrifugalverdichter so ausgebildet ist, dass die einströmende Luft die Ausbildung der Spiralflamme unterstützt. Die Anordnung von Ausnehmungen (Seitenwandbelochung in das Flammrohr) führt somit eine Sekundärströmung zur Mischung im Flammrohr zu, welche zur Ausbildung der spiralförmigen Flammenanordnung angepasst und optimiert ist.

Erfindungsgemäß beträgt somit die tatsächliche Strömungsumlenkung im Brennraum bzw. im Bereich der zentripetalen Ringbrennkammer nur noch ca. 175°, verglichen mit den aus dem Stand der Technik bekannten 300°. Dies führt unter anderem auch zu einer Intensivierung der Verbrennung, der Flammenbildung und der Flammenmischverhältnisse.

Die erfindungsgemäße Brennkammer bildet somit eine Spiralflamme aus und ist für vergleichbare Flammrohrvolumen leichter und kompakter herstellbar als herkömmliche zentripetale Ringbrennkammern.

Weiterhin erweist es sich als vorteilhaft, dass die erfindungsgemäße Ausgestaltung nach dem Radialverdichterlaufrad (Zentrifugalverdichterlaufrad) ein vereinfachtes Leitschaufelsystem aufweisen kann, welches am Austritt einen Restdrall von bevorzugt 25° aufweist. Auch dies führt zu einer einfacheren, platzsparenderen und kostengünstigeren Ausgestaltung, verglichen mit dem Stand der Technik und resultiert in einem geringeren Gesamtgewicht.

Die erfindungsgemäße Ausbildung der Spiralflamme wird durch die drallangestellten Einspritzdüsen im Flammrohrdom sowie ein stufenförmiges Hitzeschild zur Gewährleistung der Drallflamme begünstigt.

Erfindungsgemäß werden am Austritt der Ringbrennkammer mit der erfindungsgemäßen zentripetalen spiralförmigen Flammenanordnung im Turbinenleitschaufelkranz nur noch ca. die Hälfte der Anzahl an Leitschaufeln, verglichen mit einer Zentripetalringbrennkammer gemäß dem Stand der Technik, benötigt. Zudem sind diese Leitschaufeln so ausgelegt, dass eine geringere Umlenkung der Strömung erforderlich ist. Diese geringere Umlenkung beträgt nur ca. 25% der Umlenkung gemäß den aus dem Stand der Technik bekannten Brennkammerkonstruktionen. Die erfindungsgemäß vorgesehenen Leitschaufeln sind bevorzugterweise filmgekühlt und in eine ausgeprägt konvergente Ringdüse integriert. Dies gewährleistet die Beschleunigung der Verbrennungsgase bis zur Schallgeschwindigkeit. Die wenig umlenkenden erfindungsgemäßen Leitschaufeln passen die Strömungsrichtung am Brennkammeraustritt an die Strömungsrichtung im nachfolgenden Turbinenrad in vorteilhafter Weise an.

Zur Realisierung des erfindungsgemäßen Strömungsrestdralls von ca. 25° am Verdichteraustritt / Brennkammereintritt ist es erfindungsgemäß möglich, entweder die Anzahl der notwendigen Leitschaufelgitter zu reduzieren, bevorzugt auf lediglich zwei Leitschaufelgitter und einen schaufellosen Krümmerdiffusor, der für einen Restdrall von bevorzugt 25° ausgelegt ist, zu verwenden. Alternativ hierzu können erfindungsgemäß auch alle drei aus dem Stand der Technik bekannten Leitschaufelgitter verwendet werden, wobei diese so modifiziert sind, dass jedes Leitschaufelgitter für eine geringere Umlenkung ausgelegt ist, da am Austritt der bereits beschriebene Restdrall von bevorzugt 25° erzielt werden soll. Somit werden die Leitschaufelgitter weniger belastet. Dies führt dazu, dass die Druckverluste im Leitschaufelsystem des Verdichters sinken.

Im Folgenden wird die Erfindung anhand von Ausführungsbeispielen in Verbindung mit der Zeichnung beschrieben. Dabei zeigt:
- Fig. 1: eine schematische Teil-Axialschnittansicht eines Ausführungsbeispiels einer erfindungsgemäßen Gasturbinenbrennkammeranordnung,
- Fig. 2: eine Schnittansicht der Anordnung gemäß Fig. 1 in einer Radialschnittebene,
- Fig. 3: eine vereinfachte Darstellung des erfindungsgemäßen Leitschaufelsystems in einer Darstellung analog den Fig. 1 und 2,
- Fig. 4: eine Ansicht in Blickrichtung B gemäß Fig. 3 (Stand der Technik),
- Fig. 5: eine Detailansicht einer Abwicklung des Zylinderschnitts durch den Krümmerbereich des Leitschaufelsystems mit schaufelloser Darstellung,
- Fig. 6: eine Ansicht, analog Fig. 5, mit zusätzlichen Leitschaufeln, und
- Fig. 7: eine vergleichende Darstellung der erfindungsgemäßen Strömungsführung mit der Strömungsführung gemäß dem Stand der Technik.

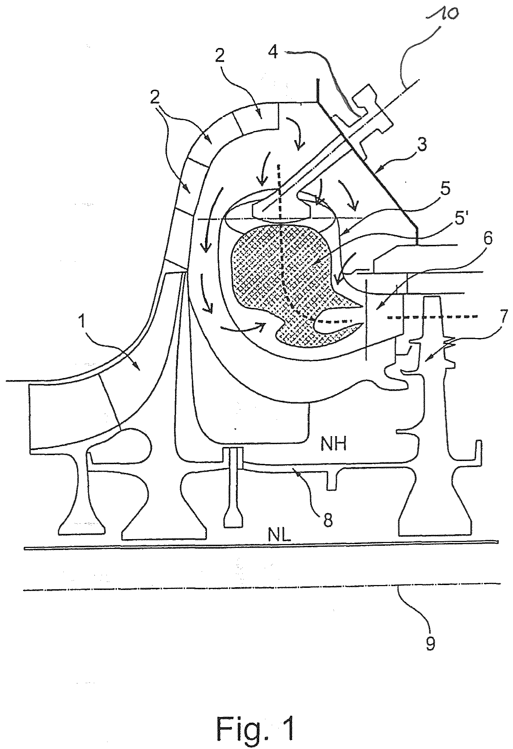

Die Fig. 1 zeigt ein Zentrifugalverdichterlaufrad 1 (Radialverdichterlaufrad), welches als solches gemäß dem Stand der Technik ausgebildet ist. Dieses rotiert um eine Triebwerksachse 9. Weiterhin zeigt die Fig. 1 in schematischer Darstellung eine Hochdruckturbine 7 sowie eine Hochdruckturbinenwelle 8.

Die aus dem Zentrifugalverdichterlaufrad 1 austretende Strömung durchströmt erfindungsgemäß ein Leitschaufelsystem (Austrittsleiträder 2 (OGV)). In dem Leitschaufelsystem 2 wird die Strömung, wie nachfolgend beschrieben werden wird, in erfindungsgemäßer Weise umgelenkt.

Weiterhin zeigt die Fig. 1 ein Brennkammergehäuse 3, in welchem Einspritzdüsen 4 angeordnet sind. Diesem ist ein Zentripetalflammrohr 5 zugeordnet. In dem Zentripetalflammrohr 5 bildet sich eine Spiralflamme 5', so wie dies in Fig. 1 gezeigt ist. Am Ausströmbereich des Zentripetalflammrohrs 5 ist eine Leitschaufelanordnung 6 vorgesehen, durch welche die Verbrennungsgase in ihrer Strömungsrichtung ausgerichtet und der Hochdruckturbine 7 zugeführt werden. Die Strömungspfeile in Fig. 1 zeigen die Durchströmung und Umströmung des Flammrohrs 5, welches belocht ist. In Fig. 1 ist der Drall nicht sichtbar.

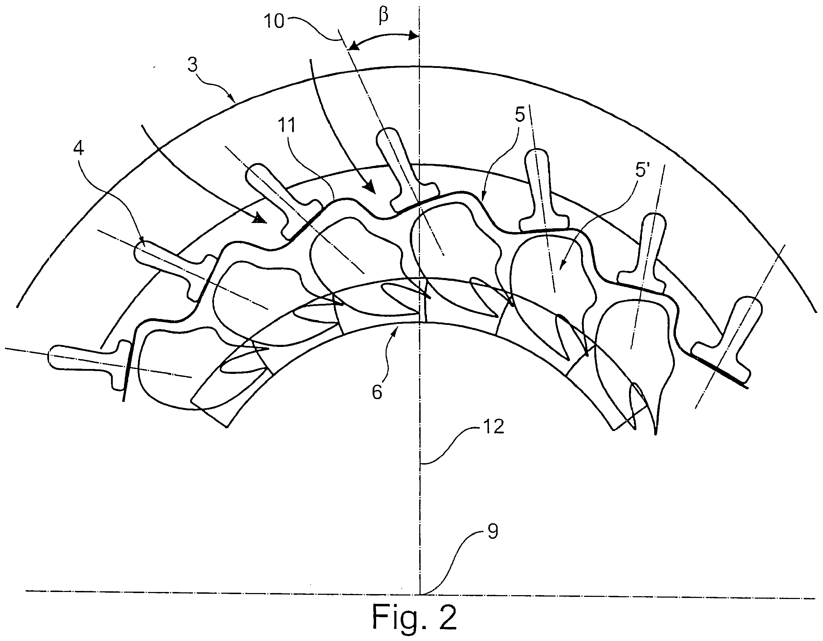

Die Fig. 2 zeigt eine Radialschnittansicht analog Fig. 1. Dabei ist eine Meridianebene 12 gezeigt, zu welcher die Mittelachsen 10 der Einspritzdüsen 4 geneigt sind. Wie weiterhin in Fig. 2 gezeigt, sind auch die Hitzeschilder 11 des Zentripetalflammrohrs 5 (Dom des Zentripetalflammrohrs) in diesem Winkel β geneigt. Die Strömungspfeile zeigen die Strömung mit einem Winkel von ca. 35° zu der durch die Triebwerksachse 9 verlaufenden Meridianebene 12. Es liegt dabei eine Drallerhaltung vor (r·cu=constant), nicht jedoch eine Drallwinkelerhaltung (r = Radius, cu = Komponente der Geschwindigkeit).

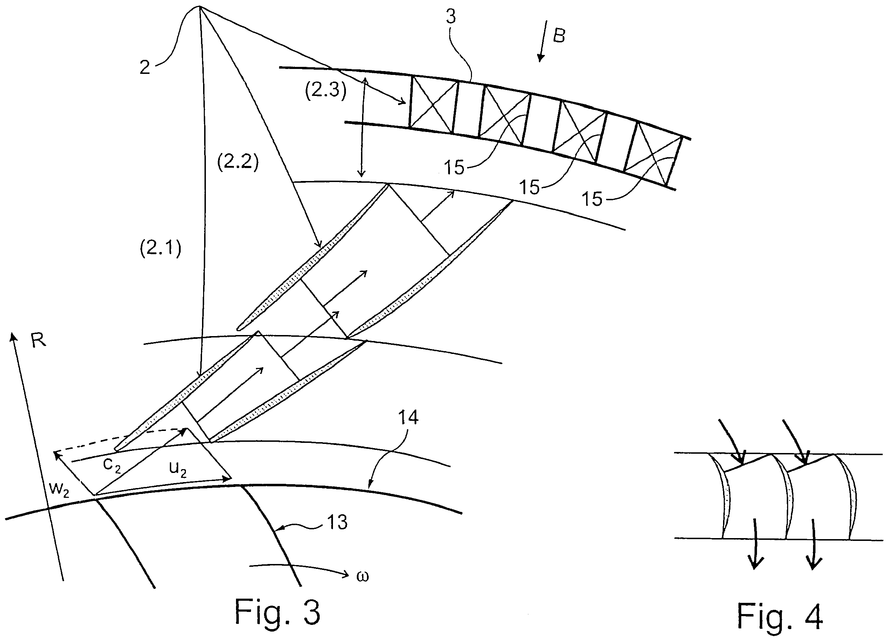

Die Fig. 3 zeigt in vereinfachter Darstellung die Strömungsführung und Strömungsumlenkung gemäß der Erfindung. Das Bezugszeichen 13 zeigt eine Rotorschaufel des Zentrifugalverdichters 1. Mit dem Bezugszeichen 14 ist ein Austrittsradius des Zentrifugalverdichter-Vorlaufrades angegeben. Die Radialrichtung zeigt der Pfeil R, während die Drehrichtung durch den Pfeil ω dargestellt wird. Weiterhin zeigt die Fig. 3 die Aufteilung der Strömungskomponenten. Mit den Bezugszeichen 2.1, 2.2 und 2.3 sind die einzelnen Leitschaufelsysteme (Leitschaufelgitter) dargestellt, durch welche die erfindungsgemäße, oben beschriebene Strömungsumlenkung erfolgt. Die Strömung erreicht, analog der Darstellung in den Fig. 1 und 2, das Brennkammergehäuse 3 und somit einen Bereich des schaufellosen Krümmers.

Die Fig. 4 zeigt eine Ansicht in Richtung des Pfeils B, aus welcher sich eine Ansicht auf das axiale Leitschaufelgitter 2.3 bei einer Durchströmung gemäß dem Stand der Technik (α = 0°) ergibt.

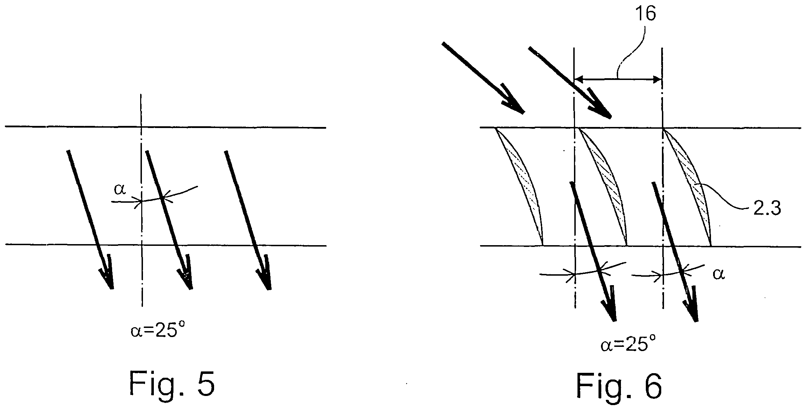

Die Fig. 5 und 6 zeigen zwei Ausgestaltungsvarianten in Abwicklung des Zylinderschnitts durch den Krümmerbereich zur Aufnahme des Leitschaufelgitters 2.3 des Leitschaufelsystems 2. In Fig. 5 ist eine Variante dargestellt, welche schaufellos ausgebildet ist und den erfindungsgemäßen Restdrall mit einem Winkel von α = 25° ausbildet. In Fig. 6 sind die Schaufeln des Leitschaufelgitters 2.3 dargestellt, welche eine Teilung 16 aufweisen und zur Ausbildung des Restdrallwinkels α von 25° ausgebildet sind.

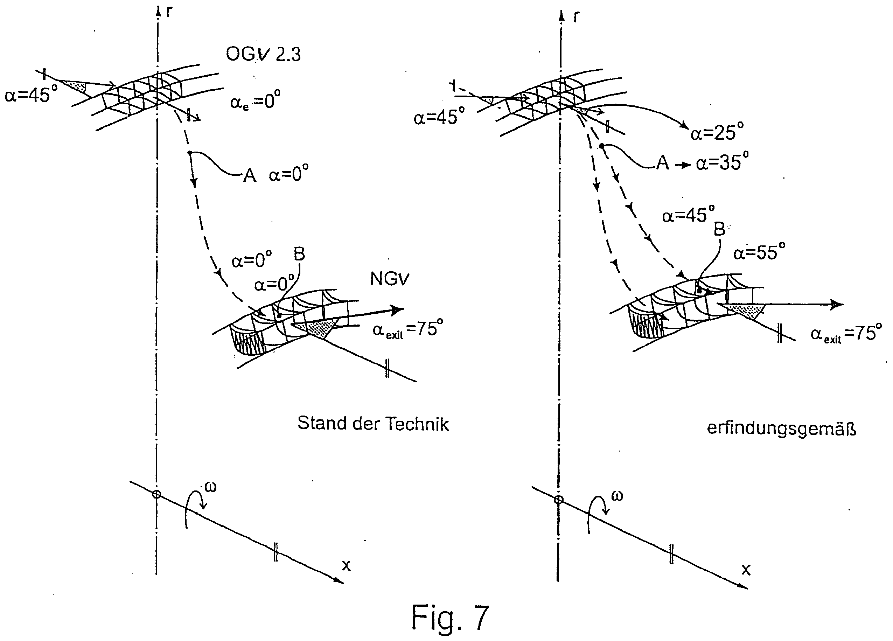

Die Fig. 7 zeigt eine vergleichende Darstellung der erfindungsgemäßen Durchströmung mit der aus dem Stand der Technik bekannten Durchströmung. Dabei ist in der linken Bildhälfte der Fig. 7 die Durchströmung gemäß dem Stand der Technik dargestellt, während die rechte Bildhälfte die erfindungsgemäße Durchströmung zeigt.

Im oberen Bereich der linken Bildhälfte der Fig. 7 sind schematisch die Austrittsleiträder (OGV) 2.3 dargestellt. In diese strömt die Strömung gemäß dem Stand der Technik mit einem Winkel von α = 45° und wird dabei zu einem Austrittswinkel αₑ = 0° umgeleitet.

Im Vergleich hierzu zeigt die rechte obere Bildhälfte der Fig. 7 die erfindungsgemäße Strömungsführung. Auch hier strömt die Strömung mit einem Winkel von α = 45° in die Austrittsleiträder (OGV) 2.3. Die Strömung wird dabei jedoch nicht auf einen Winkel von α = 0° umgelenkt, sondern verlässt die Austrittsleiträder mit einem Winkel von α = 25°.

In dem nachfolgend in Fig. 7 dargestellten Strömungsverlauf ist ersichtlich, dass beim Stand der Technik an einer Position A der Brenner auf dem Hitzeschild die Strömung einen Winkel von α = 0° aufweist. Im Vergleich hierzu zeigt die rechte Bildhälfte der Fig. 7, dass erfindungsgemäß die Strömung an der Position A einen Winkel von α = 35° aufweist (Drallerhaltung).

Die Darstellung des Strömungsverlaufs gemäß dem Stand der Technik (linke Bildhälfte von Fig. 7) zeigt, dass die Strömung nachfolgend mit einem Winkel von α = 0° weitergeführt wird und an einer Position B mit diesem Winkel von α = 0° den Leitschaufeln der Hochdruckturbine (Düsenleitschaufeln; NGV, nozzle guide vane) zugeführt wird. Beim Verlassen der NGVs weist die Strömung einen Drallwinkel αₑₓᵢₜ von 75° auf.

Im Gegensatz hierzu zeigt die rechte Bildhälfte der Fig. 7 den erfindungsgemäßen Strömungsverlauf. Nach einem Austritt aus den Austrittsleiträdern 2.3 mit einem Wert von α = 25° ergibt sich an der Position A ein Winkel von α = 35°. Dieser vergrößert sich bei der weiteren Durchströmung auf α = 45°, so dass in der Position B ein Winkel vom α = 55° vorliegt. Der Austrittswinkel αₑₓᵢₜ beträgt dann 75°. Die rechte Bildhälfte der Fig. 7 zeigt im Vergleich auch den Strömungsverlauf gemäß dem Stand der Technik, der in Fig. 7 in der linken Bildhälfte dargestellt ist. Aus dem Vergleich der beiden Strömungsverläufe in der rechten Bildhälfte der Fig. 7 ergibt sich die erfindungsgemäße Strömungsführung. Im Flammrohrraum wird die Strömung somit mit einer Drallströmung mit steigendem Winkel α bei abnehmendem Radius r gemäß der Drallerhaltung geführt.

Erfindungsgemäß ist, wie bereits erläutert, die Gestaltung des Flammrohrs zwischen den Positionen A (Position der Brenner auf dem Hitzeschild) und der Position B (Leitschaufel der Hochdruckturbine, NGV) räumlich so angepasst, dass die Verbrennung und die Durchmischung optimiert werden. Dies erfolgt u.a. durch eine Anstellung der Hitzeschilder, durch eine geeignete Belochung sowie eine geeignete Auswahl der Breite der Strömungswege. Dies ist aus dem Vergleich der beiden Strömungsverläufe der Fig. 7 deutlich ersichtlich, insbesondere im Vergleich zu der in der linken Bildhälfte der Fig. 7 gezeigten Strömungsführung mit einem Flammrohrraum mit nach innen gerichteter Strömung in einer Meridianebene (α = 0°).

### Bezugszeichenliste:

- 1: Zentrifugalverdichterlaufrad
- 2: Austrittsleitrad (OGV) nach dem Zentrifugalverdichterlaufrad (Leitschaufelanordnung, Leitschaufelsystem)
- 3: Brennkammergehäuse
- 4: Einspritzdüse / Brenner
- 5: Zentripetalflammrohr / Dom des Zentripetalflammrohrs
- 5': Spiralflamme / Flamme
- 6: Leitschaufel (NGV) zur Turbine / Turbinenleitschaufelkranz
- 7: Hochdruckturbine
- 8: Hochdruckturbinenwelle
- 9: Triebwerksachse
- 10: Mittelachse der Einspritzdüse
- 11: Hitzeschild
- 12: Meridianebene
- 13: Rotorschaufel des Zentrifugalverdichters 1
- 14: Zentrifugalverdichter-Austrittsradius
- 15: Hinterkante des Leitschaufelgitters 2.3 des Leitschaufelsystems 2
- 16: Teilung

## Patentansprüche

1. Gasturbinenbrennkammeranordnung mit zumindest einem Zentrifugalverdichter (1) sowie einer zentripetalen Ringbrennkammer mit Brennern (4), wobei zwischen dem Zentrifugalverdichter (1) und der Ringbrennkammer eine Leitschaufelanordnung (2) angeordnet ist, wobei die Leitschaufelanordnung (2) zur Umlenkung der aus dem Zentrifugalverdichter (1) ausströmenden Luft in einem axialen Winkel (α) von 20° bis 30°, bevorzugt 25° zur Triebwerksachse (9) ausgebildet ist, wobei die Luftströmung in im Wesentlichen diesem Winkel (α) der Brennkammer zugeführt wird, wobei der Einströmbereich in die Brennkammer zur Zuführung der Luft mit einem Winkel von 30° bis 40°, bevorzugt 35° zur Triebwerksachse (9) ausgebildet ist, und wobei die Mittelachsen (10) der Brenner (4) zur Aufbringung eines Anfangsdralls auf die Flammen (5') des Brenners in einem Winkel (β) von 30° bis 40°, bevorzugt 35° zu einer durch die Triebwerksachse (9) verlaufenden Meridianebene (12) geneigt angeordnet sind.

2. Gasturbinenbrennkammeranordnung nach Anspruch 1, **dadurch gekennzeichnet, dass** Hitzeschilder (11) der Brenner (4) in einem Winkel (β) von 30° bis 40°, bevorzugt 35° zu einer durch die Triebwerksachse (9) verlaufenden Meridianebene (12) geneigt angeordnet sind.

3. Gasturbinenbrennkammeranordnung nach einem der Ansprüche 1 bis 2, **dadurch gekennzeichnet, dass** eine Anordnung von Ausnehmungen zur Einbringung von Luft aus dem Zentrifugalverdichter (1) zur Ausbildung einer Spiralflamme (5') in dem Zentripetalflammrohr (5) ausgebildet ist.

4. Gasturbinenbrennkammeranordnung nach einem der Ansprüche 1 bis 3, wobei die Leitschaufelanordnung aus lediglich zwei Leitschaufelgittern und einem schaufellosen Krümmerdiffusor besteht oder aus drei Leitschaufelgittern besteht.

5. Verfahren zur Strömungsführung in einer Gasturbinenbrennkammeranordnung nach Anspruch 1 mit einem Zentrifugalverdichter (1) und einer zentripetalen Ringbrennkammer einer Gasturbine, bei welchem eine aus dem Zentrifugalverdichter (1) austretende Strömung in einem Winkel (α) von 20° bis 30°, bevorzugt 25° zur Triebwerksachse, ausgerichtet wird, bei welchem die Strömung in einem Winkel (α) der Ringbrennkammer zugeführt wird, bei welchem die Strömung im Einströmbereich in die Ringbrennkammer in einem Winkel von 30° bis 40°, bevorzugt 35° zur Meridianebene (12) ausgerichtet wird, und bei welchem die aus der Ringbrennkammer austretende Strömung in einem Winkel von 50° bis 60°, bevorzugt 55° zur einer die Triebwerksachse (9) umfassenden Meridianebene (12) ausgerichtet wird.

## Claims

1. Gas-turbine combustion chamber arrangement with at least one centrifugal compressor (1) as well as one centripetal annular combustion chamber with burners (4), where a stator vane arrangement (2) is provided between the centrifugal compressor (1) and the annular combustion chamber, where the stator vane arrangement (2) for diverting the air flowing out of the centrifugal compressor (1) is designed at an axial angle (α) of 20° to 30°, preferably 25°, relative to the engine axis (9),
where the airflow is passed at essentially this angle (α) to the combustion chamber,
where the inflow area into the combustion chamber for supplying air is designed at an angle of 30° to 40°, preferably 35°, relative to the engine axis (9), and
where the center axes (10) of the burners (4) for applying an initial swirl onto the flames (5') of the burner are arranged inclined at an angle (ß) of 30° to 40°, preferably 35°, relative to a meridional plane (12) passing through the engine axis (9).

2. Gas-turbine combustion chamber arrangement in accordance with Claim 1, **characterized in that** the heat shields (11) of the burners (4) are arranged inclined at an angle (ß) of 30° to 40°, preferably 35°, relative to a meridional plane (12) passing through the engine axis (9).

3. Gas-turbine combustion chamber arrangement in accordance with one of the Claims 1 to 2, **characterized in that** an array of recesses for introducing air from the centrifugal compressor (1) is designed to form a helical flame (5') in the centripetal flame tube (5).

4. Gas-turbine combustion chamber arrangement in accordance with one of the Claims 1 to 3, **characterized in that** the stator vane arrangement consists of only two stator vane grids and a vane-free manifold diffuser, or of three stator vane grids.

5. Method for flow guidance in a gas-turbine combustion chamber arrangement in accordance with Claim 1 with a centrifugal compressor (1) and a centripetal annular combustion chamber of a gas turbine, where a flow exiting the centrifugal compressor (1) is aligned at an angle (α) of 20° to 30°, preferably 25°, relative to the engine axis, where the flow is supplied to the annular combustion chamber at an angle (α), where the flow in the inflow area into the annular combustion chamber is aligned at an angle of 30° to 40°, preferably 35°, relative to the meridional plane (12), and where the flow exiting the annular combustion chamber is aligned at an angle of 50° to 60°, preferably 55°, relative to a meridional plane (12) including the engine axis (9).

## Revendications

1. Système de chambre de combustion de turbine à gaz avec au moins un compresseur centrifuge (1) ainsi qu'une chambre de combustion annulaire centripète avec brûleurs (4), sachant qu'un système à aubes fixes (2) est disposé entre le compresseur centrifuge (1) et la chambre de combustion annulaire,
sachant que le système à aubes fixes (2) est conçu pour dévier l'air sortant du compresseur centrifuge (1) dans un angle axial (α) compris entre 20° et 30°, de préférence 25° par rapport à l'axe du moteur (9),
sachant que le flux d'air est guidé à la chambre de combustion essentiellement dans cet angle (α),
sachant que la zone d'afflux dans la chambre de combustion pour l'alimentation de l'air est conçue avec un angle compris entre 30° et 40°, de préférence 35° par rapport à l'axe du moteur (9), et
que les axes médians (10) des brûleurs (4) pour appliquer un mouvement tourbillonnaire initial aux flammes (5') du brûleur sont inclinés à un angle (β) compris entre 30° et 40°, de préférence 35° par rapport à un plan méridien (12) traversant l'axe du moteur (9).

2. Système de chambre de combustion de turbine à gaz selon la revendication n° 1, **caractérisé en ce que** les écrans thermiques (11) des brûleurs (4) sont inclinés à un angle (β) compris entre 30° et 40°, de préférence 35° par rapport à un plan méridien (12) traversant l'axe du moteur (9).

3. Système de chambre de combustion de turbine à gaz selon une des revendications n° 1 à n° 2, **caractérisé en ce qu'**une série d'évidements servant à appliquer l'air sortant du compresseur centrifuge (1) est conçue pour former une flamme hélicoïdale (5') dans le tube à flammes centripète (5).

4. Système de chambre de combustion de turbine à gaz selon une des revendications n° 1 à n° 3, **caractérisé en ce que** le système à aubes fixes se compose uniquement de deux grilles d'aubes fixes et d'un diffuseur collecteur sans aube ou de trois grilles d'aubes fixes.

5. Procédé pour le guidage de flux dans un système de chambre de combustion de turbine à gaz selon la revendication n° 1 avec un compresseur centrifuge (1) et une chambre de combustion annulaire centripète d'une turbine à gaz lors duquel un flux sortant du compresseur centrifuge (1) est orienté dans un angle (α) compris entre 20° et 30°, de préférence 25° par rapport à l'axe du moteur, lors duquel le flux est distribué dans un angle (α) à la chambre de combustion annulaire, lors duquel le flux dans la zone d'afflux dans la chambre de combustion annulaire est orienté dans un angle compris entre 30° et 40°, de préférence 35° par rapport au plan méridien (12) et lors duquel le flux sortant de la chambre de combustion annulaire est orienté dans un angle compris entre 50° et 60°, de préférence 55° par rapport à un plan méridien (12) comprenant l'axe du moteur (9).
